# EUROPÄISCHE PATENTSCHRIFT

(11) **EP 1 550 812 B1**
(45) Veröffentlichungstag und Bekanntmachung des Hinweises auf die Patenterteilung: **28.06.2006**
(21) Anmeldenummer: 04000001.0
(22) Anmeldetag: 02.01.2004
(51) Int. Cl.: F04D 29/66, F04D 29/06, F04D 29/04

(54) **Strömungsmaschine**
Turbomachine
Turbomachine

(43) Veröffentlichungstag der Anmeldung: 06.07.2005
(73) Patentinhaber: BorgWarner Inc., Auburn Hills, MI 48326-2872 (US)
(72) Erfinder: Dellmann, Udo, 67727 Lohnsfeld (DE)
(74) Vertreter: Pautex Schneider, Nicole Véronique

(56) Entgegenhaltungen:
- DE-A- 2 829 150
- DE-A- 4 119 386
- US-A- 4 613 288
- US-A- 5 399 064

## Beschreibung

### Gebiet der Erfindung

Die vorliegende Erfindung bezieht sich auf eine Strömungsmaschine mit einer Welle, einem Lagergehäuse zum Lagern der Welle, welche über mindestens zwei zu mindestens einem Wellenlager führenden Schmierbohrungen geschmiert ist, welche eine vorbestimmte Geometrie hinsichtlich Durchmesser, Länge und Winkelanordnung aufweisen und einem Turbinengehäuse zur Unterbringung eines an der Welle befestigten Turbinenrades in einem Turbinenraum des Turbinengehäuses, das am Lagergehäuse angeschlossen ist.

Wenn hier von einer Strömungsmaschine die Rede ist, so sei darunter sowohl eine Turbine oder eine Sekundärluftpumpe, bevorzugt aber ein Turbolader verstanden.

### Hintergrund der Erfindung

Das Problem der Geräuschentwicklung bei Strömungsmaschinen ist bekannt. Dementsprechend sind auch schon die verschiedensten Vorschläge zur Geräuschdämpfung gemacht worden. Diese Dämpfungseinrichtungen wurden teilweise an den und um die Schaufeln eines Rotors angebracht, wie etwa die U.S. Patente Nr. 5,110,258; 5,173,020; 5,820,348 und 6,309,176 oder die EP-0 039 459 zeigen. Andere Vorschläge zielen darauf ab, am Strömungseingang und/oder -ausgang eines Flügelrotors einen Schalldämpfer vorzusehen. Beispiele finden sich in den U.S. Patenten Nr. 3,578,107; 4,204,586 und 4,969,536 oder der EP-0 573 895. Eine Strömungsmachine mit den Merkmalen nach dem Oberbegriff des Anspruchs 1 ist aus US 4,613,288 oder aus US 5,399,064 bekannt.

Alle diese Maßnahmen führen zur einer Verminderung der Geräuschentwicklung, es bleiben aber stets noch restliche Geräusche, deren Herkunft nicht immer geklärt ist.

### Kurzfassung der Erfindung

Gerade diese restlichen Geräusche - nach Ausschaltung anderer Geräuschquellen - wurden von der Anmelderin eingehend untersucht. Es hat sich dabei - und diese Erkenntnis ist ein erster Schritt in Richtung auf die Erfindung - überraschend herausgestellt, daß ein Teil der von einer Strömungsmaschine ausgehenden Geräusche von der Wellenlagerung ausgeht. Dies war deshalb überraschend, weil man davon ausging, daß das Wellenlager ja nichts weiter zu tun hat, als der Welle eine ruhige und gleichmäßige Drehung zu ermöglichen.

Als daher dieses Phänomen weiter untersucht wurde, war die Überraschung noch größer, weil sich herausstellte, daß es das Zusammenwirken von Lager und Schmierung war, welches das Geräusch erzeugte. Eine solche Schmierung weist im allgemeinen mindestens zwei, meistens mehr, Schmierbohrungen auf, die etwa sternförmig in das Lager führen. Jede dieser Bohrungen enthält natürlich Schmiermittel, und es wurde gefunden, daß es die sich innerhalb des Schmierfilmes ergebenden Halbfrequenzwirbel waren, welche eine Schwingungsanregung der Lagerbuchse und somit ein Geräusch erzeugten, vermutlich aber (ohne sich an eine solche Theorie binden zu wollen) damit auch die in jeder Schmiermittelbohrung enthaltene eine Fluidsäule bestimmter Länge und Dicke (und geometrischer Anordnung zum Lager) beim Betrieb der Strömungsmaschine zum Schwingen bringen.

Sobald diese beiden Erkenntnisschritte vollzogen waren, bedurfte es nur mehr eines weiteren Schrittes, um zu Erfindung zu gelangen, die im wesentlichen darin besteht, daß innerhalb des Lagergehäuses am Wellenlager eine Schallunterdrückungsanordnung vorgesehen ist. Hier ist das Wort "am Wellenlager" im weitesten Sinne zu verstehen und umfaßt sowohl die Anordnung im Wellenlager, als auch innerhalb des Lagergehäuses um dieses herum.

Im Prinzip kann natürlich die Schallunterdrückungsanordnung jede an sich bekannte Form annehmen, beispielsweise mit schallabsorbierenden Mitteln, mit Interferenzanordnungen und/oder mit einer Helmholtz-Anordnung verwirklicht sein. Es hat sich jedoch als am einfachsten durchführbar und dabei am wirkungsvollsten erwiesen, wenn die Schallunterdrückungsanordnung für wenigstens zwei der Schmierbohrungen eine unterschiedliche Geometrie aufweist. Als "Geometrie" der Schallunterdrückungsanordnung wurde oben bereits die Auslegung von Durchmesser, Länge und Winkelanordnung (bezüglich des Wellenlagers) definiert.

Besonders günstige Ergebnisse haben sich gezeigt, wenn die Schallunterdrückungsanordnung für wenigstens zwei der Schmierbohrungen eine unterschiedliche Geometrie bezüglich der Lagerbuchse aufweist. Es wurde gefunden, daß damit zwei Effekte in einem erreicht werden. Denn dadurch, daß der Halbfrequenzwirbel nun nicht mehr eine gleichmäßige Anregung erzeugen kann, sondern immer wieder während der Umdrehung der Welle auf Grund der Geometrieänderung gestört wird, so können auch die Fluidsäulen in den Bohrungen nicht mehr mit derselben Frequenz schwingen, was die Geräuschentwicklung weiter reduziert.

Eine solche unterschiedliche Geometrie kann natürlich auf die verschiedenste Weise erzielt werden, beispielsweise, indem etwa die Einmündung mindestens einer der Schmiermittelbohrungen in das Innere der Lagerbuchse gegenüber der Einmündung in die Außenfläche der Lagerbuchse verengt wird, d.h. daß die Bohrung radial außen einen größeren Durchmesser als radial innen besitzt. Dies bringt jedoch eine aufwendige Bearbeitung mit sich, weshalb mindestens eine der folgenden Möglichkeiten bevorzugt ist:
- mindestens eine der Schmierbohrungen besitzt einen gegenüber der mindestens zweiten Schmierbohrung einen unterschiedlichen Durchmesser;
- mindestens eine der Schmierbohrungen besitzt einen gegenüber der mindestens zweiten Schmierbohrung einen unterschiedlichen Einmündungswinkel in das Innere der Lagerbuchse und/oder eine unterschiedliche Länge;
- die Schmierbohrungen sind mit unterschiedlichen Umfangswinkeln über den Umfang der Lagerbuchse verteilt.

Es versteht sich, daß die oben genannten Maßnahmen auch untereinander kombiniert werden können.

### Kurzbeschreibung der Zeichnung

Weitere Einzelheiten der Erfindung ergeben sich an Hand der nachfolgenden Beschreibung von in der Zeichnung schematisch dargestellten Ausführungsbeispielen. Es zeigen:
- Fig. 1: einen Axialschnitt durch die erfindungsgemäße Gehäuseanordnung eines Turboladers;
- Fig. 2: eine erste bevorzugte Ausführungsform in einem vergrößerten Schnitt nach der Linie X-X der Fig. 1;
- Fig. 3: eine zweite bevorzugte Ausführungsform in einem vergrößerten Schnitt nach der Linie X-X der Fig. 1; und
- Fig. 4: eine dritte bevorzugte Ausführungsform in einem vergrößerten Schnitt nach der Linie X-X der Fig. 1;
- Fig. 5: ein Amplitudenspektrum bei einer herkömmlichen Ausführung mit rotationssymmetrisch angeordneten, gleichmäßig dimensionierten Schmiermittelbohrungen;
- Fig. 6: ein Amplitudenspektrum bei einer erfindungsgemäßen Ausführung gemäß Fig. 2;
- Fig. 7: ein Beschleunigungsspektrum bei einer herkömmlichen Ausführung mit rotationssymmetrisch angeordneten, gleichmäßig dimensionierten Schmiermittelbohrungen; und
- Fig. 8: ein Beschleunigungsspektrum bei einer erfindungsgemäßen Ausführung gemäß Fig. 2.

### Detaillierte Beschreibung der Zeichnungen

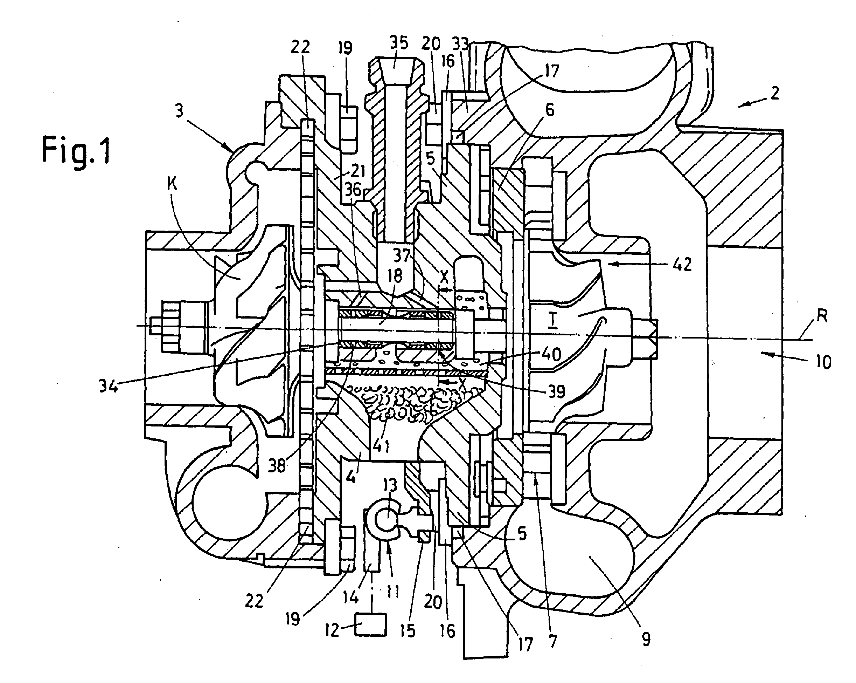

Gemäß Fig. 1 weist ein Turbolader 1 in üblicher Weise einen Turbinengehäuseteil 2, einen Lagergehäuseteil 4 und einen damit verbundenen Kompressorgehäuseteil 3 auf, die entlang einer Rotations- bzw. Längsachse R angeordnet sind, entlang welcher Achse R sich eine Welle 18 erstreckt. An jedem Ende dieser Welle 18 ist ein Rotor befestigt, nämlich ein Turbinenrotor T an einem Ende innerhalb des Turbinengehäuses 2 in einem Turbinenraum 42 und ein im Kompressorgehäuse 3 untergebrachter Kompressorrotor K am anderen Ende.

Das Lagergehäuse 4 ist rund um die Längsachse R mittels Schraubbolzen 19 am Kompressorgehäuse 3 und mit Schraubbolzen 20 in einer durch eine Wand 33 gebildeten Öffnung am Turbinengehäuse 2 befestigt. Zwischen einem Befestigungsflansch 21 des Lagergehäuses 4 und dem Kompressorgehäuse 3 ist ein Dichtungsring 22 angeordnet, der jedoch infolge der dort herrschenden relativ geringen Temperaturen herkömmlicher Art sein kann.

Der Turbinengehäuseteil 2 enthält einen Schaufellagerring 6 eines an sich bekannten Leitgitters variabler Geometrie mit über den Umfang verteilten Leitschaufeln 7, die um ihre den Schaufellagerring 6 durchsetzenden Schwenkachsen oder Schwenkwellen 8 verdrehbar sind, so daß sie zwischen einander Düsenquerschnitte bilden, die je nach der Lage der Leitschaufeln 7, nämlich mehr radial oder mehr tangential, größer oder kleiner sind und den in der Mitte an der Achse R gelegenen Turbinenrotor T mehr oder weniger mit dem über einen Zufuhrkanal 9 zugeführten und über einen zentralen Stutzen 10 abgeführten Abgas eines Motors beaufschlagen, um über den Turbinenrotor einen auf derselben Welle 18 sitzenden Kompressorrotor K anzutreiben. Der Mechanismus zum Verstellen der Schaufeln kann verschiedener Art sein und wird im allgemeinen von einer Steuereinrichtung 12 ausgehen, von wo aus die Steuerbewegungen einer darin befindlichen Membrane auf ein an ihr befestigtes Stößelglied 14 übertragen werden. Das Stößelglied 14 weist ein balliges Lager 11 auf, in dem ein Kurbelzapfen 13 eines Kurbelhebels 15 liegt. Der Kurbelhebel 15 ist in bekannter Weise mit einer Verstellwelle verbunden, die in Fig. 1 in einer anderen und deshalb in dieser Figur nicht sichtbaren Ebene liegt. Von dieser Welle aus kann dann die Steuerbewegung auf die Schwenkwellen 8 über an den Schwenkwellen 8 befestigte Hebeln, über Zahhsektoren oder auf andere, an sich bekannte Weise übertragen werden. Die Welle 18 ist in üblicher Art und an sich in beliebiger bekannter Weise im Lagergehäuse 4 gelagert, wobei die Art der Lagerung für die vorliegende Erfindung unerheblich ist.

Das Lagergehäuse 4 endet gegen das Turbinengehäuse 2 hin in einem Endflansch 5, der in eine entsprechende Vertiefung des Turbinengehäuses 2 eingesetzt wird, bevor beide Gehäuseteile 2, 4 mittels der Schraubbolzen 20 aneinander befestigt werden. Am Flansch 5 kann ein Haltering oder einfach eine Unterlagscheibe16 für den Schraubbolzen 20 entweder angeschraubt oder mit dem Flansch 5 einstückig gegossen sein. Dieser Haltering 16 hält einen im Querschnitt etwa quadratischen Dichtungsring 17 fest, der in einer entsprechend quadratischen Nut des Turbinengehäuses 2 sitzt. Der Haltering 16 kann aber auch zusätzlich zur Montage des Lagergehäuses 4 am Turbinengehäuse 2 dienen und so die axiale Lage des Lagergehäuses 4 relativ zum Turbinengehäuse 2 festlegen.

Im Lagergehäuse 4 ist eine Lagerbuchse zum Lagern der Welle 18 untergebracht, welche Lagerbuchse 34 über einen zentralen Schmiernippel 35 Schmiermittel erhält. Dieses vom Schmiernippel 35 zur Lagerbuchse 34 fließende Schmiermittel wird an dem der Lagerbuchse 34 zugekehrten Ende des Schmiernippels 35 über Bohrungen 36 und 37 zu Radialbohrungen 38 und 39 der Lagerbuchse 34 hin verteilt und bildet dann zwischen der Innenwand der Lagerbuchse 34 und der Außenfläche der Welle 18 einen Schmiermittelfilm. Es hat sich nun gezeigt, daß dieser Schmiermittelfilm die Ursache eines aus dem Lagergehäuse 4 austretenden Geräusches ist, indem sich bei der Umdrehung der die Rotoren K und T tragenden Welle 18 innerhalb des Schmiermittelfilmes Halbfrequenzwirbel bilden, die Lager zu Schwingungen anregen und Geräusche erzeugen.

Eine Möglichkeit wenigstens zur Verminderung dieses Geräusches sind herkömmliche Schalldämpfer, wie ein Helmholtz-Lochblech 40, das rund um die Lagerbuchse 34 gelegt ist und zusammen mit dem Lagergehäuse 4 selbst eine Helmholtz-Schalldämpfung ergibt. Dazu kann auch schallabsorbierendes Material 41 im Lagergehäuse 4 untergebracht werden. Ein besonders wirksames Mittel zur Schall- und Geräuschunterdrückung sei aber nun an Hand der folgenden Figuren beschrieben.

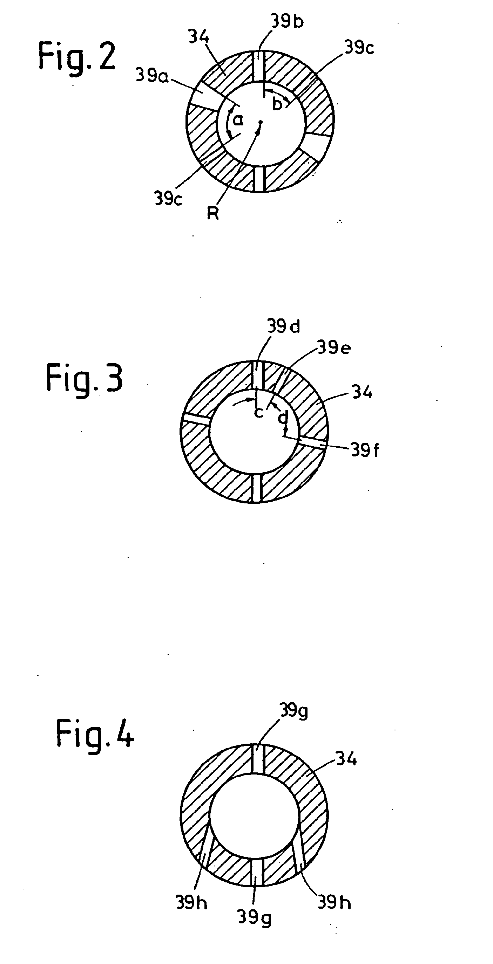

Im Falle der Ausführungsform nach Fig. 2 sind Schmierbohrungen 39a, 39b, 39c unterschiedlichen Durchmessers in gleichmäßigen Winkelabständen rund um die Drehachse R angeordnet und werden in an sich bekannter Weise über die Schmiermittelbohrung 37 (vgl. Fig. 1) mit Schmiermittel versorgt. Dadurch, daß die Durchmesser der Bohrungen 39a - 39c unterschiedlich sind, ist auch der Winkelabstand a von einer Begrenzungswand der Schmiermittelbohrung 39c zur entsprechenden Begrenzungswand der Schmiermittelbohrung 39a gegenüber dem Winkelabstand b zwischen den Begrenzungswänden der Schmiermittelbohrungen 39b und 39c unterschiedlich, und dasselbe gilt für den hier nicht eingezeichneten Abstand zwischen den Bohrungen 39a und 39b. Dadurch aber kann sich kein deutlicher Halbfrequenzwirbel aufbauen, und das sonst entstehende Geräusch wird vermindert. Ein zusätzlicher Effekt mag darin liegen, daß jede dieser Schmiermittelbohrungen 39a, 39b und 39c (betrachtet als eine durch die Halbfrequenzwirbel des Schmiermittelfilmes zwischen Innenwand der Lagerbuchse 34 und der Außenfläche der Welle 18 zu Schwingungen anregbare Fluidsäule) eine andere Eigenfrequenz besitzt.

Eine andere bevorzugte Möglichkeit mit etwa demselben Effekt ist aus Fig. 3 ersichtlich, wo Schmiermittelbohrungen 39d, 39e und 39f in unterschiedlichen Winkelabständen c bzw. d angeordnet sind und sich so im wesentlichen derselbe oder ein ähnlicher Effekt ergibt, wie er oben geschildert wurde.

Im Falle der Ausführung nach Fig. 4 sind nicht nur die Winkelabstände zwischen den Einmündungen der Bohrungen 39g und 39h verschieden, sondern die Schmiermittelbohrungen 39h - während die Bohrungen 39g etwa radial in das Innere der Lagerbuchse 34 einmünden - münden beinahe tangential in die Lagerbuchse 34 ein, was bedeutet, daß auch die Auswirkungen der Halbfrequenzwirbel des Schmierfilmes auf die Einmündungen der Bohrungen 39g einerseits und der Bohrungen 39h anderseits unterschiedlich sein werden. Dazu kommt, daß naturgemäß die Länge der Schmiermittelbohrungen 39h etwas größer als die der radial einmündenden Bohrungen 39g ist, so daß auch die Eigenschwingung des darin befindlichen Fluids unterschiedlich sein wird.

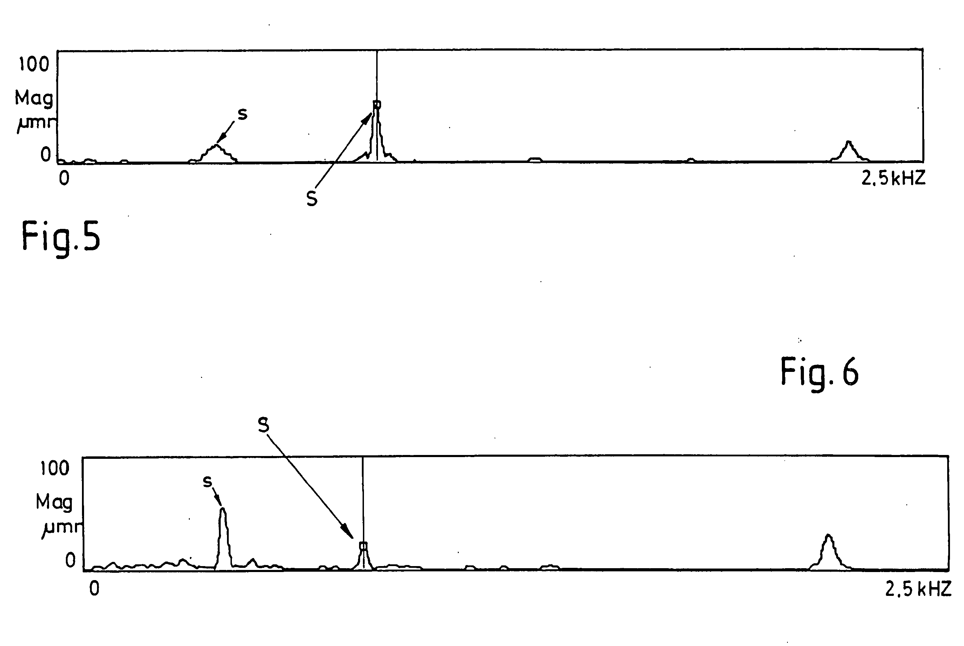

Es versteht sich, daß die an Hand der Fig. 2 bis 4 gezeigten Möglichkeiten nicht nur untereinander kombiniert, sondern auch auf die verschiedenste Weise variiert werden können, wenn man sich nur vor Augen führt, daß es der Sinn dieser Maßnahmen ist, die den Schall beeinflussende Geometrie für verschiedene (mindestens zwei Schmiermittelbohrungen 39) unterschiedlich zu machen. Wie weiter unten an Hand eines Vergleichs der Fig. 5 und 6 gezeigt wird, läßt sich der bisher störende Schall damit weitgehend unterdrücken, auch wenn die aus Fig. 1 ersichtlichen weiteren Maßnahmen (Helmholtzblech 40 und Schallabsorptionsmasse 41) nicht getroffen werden. Nichts desto weniger können im Rahmen der Erfindung auch zusätzliche, an sich bekannte Schalldämpfungsmaßnahmen getroffen werden, wie es für Lagergehäuse 4 bisher unbekannt war.

Fig. 5 zeigt ein Diagramm, bei dem auf der Abszisse die Frequenz in kHz und auf der Ordinate die Amplitude der Wellenauslenkung in µm aufgetragen ist (die Angabe "µmr" bezieht sich auf die Art der Messung, nämlich eine rms-Messung). Dabei ist ersichtlich, daß etwa im Bereiche von 900 Hz sich eine deutliche Spitze S ausgebildet hat, die für das in Versuchen festgestellte Geräusch verantwortlich ist. Daneben befindet sich noch im nicht mehr wahrnehmbaren Bereich eine kleine Erhebung s.

Fig. 6 dagegen zeigt jenes ähnliche Diagramm, welches sich bei Ausbildung der Schmiermittelbohrungen gemäß Fig. 2 ergibt: die im selben Frequenzbereich aufscheinende, nun kleiner Spitze S weist also eine deutlich geringere Amplitude auf. Dagegen ist zwar die ursprünglich kleine Spitze s gewachsen, doch stört dies nicht, da sie sowieso nicht mehr vernehmbar ist.

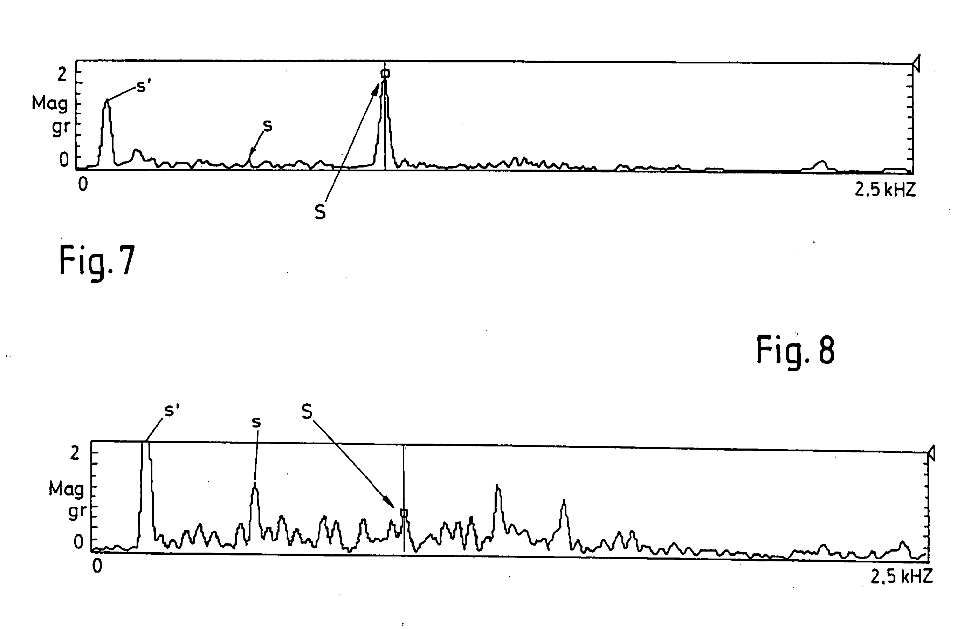

Man kann nun der Frage nachgehen, woher sich die Frequenzbereiche nach den Fig. 5 und 6 ergeben und damit jenem ersten erfinderischen Schritt der Problemerkennung. Dies sei an Hand der Beschleunigungsspektren (Körperschallmessung bzw. Messung der Beschleunigung in g auf der Ordinate und Frequenz in kHz auf der Abszisse) der Fig. 7 und 8 versucht. Es ist - im Vergleich mit den Fig. 5 und 6 - deutlich, dass auch hier die Spitzen S und s erkennbar sind. Es ist allerdings auffallend, dass zusätzlich noch eine, weit im unteren Frequenzbereich gelegene weitere Spitze s' existiert, die sich zwar bei der erfindungsgemäßen Ausbildung vergrößert, aber - wie der Vergleich mit den Fig. 5 und 6 zeigt - sich im Frequenzspektrum gar nicht auswirkt. Der Grund liegt darin, daß - wie gefunden wurde - die Spitze s' von der Zündfrquenz des Verbrennungsmotors hervorgerufen wird und deshalb nicht weiter berücksichtigt werden muß.

Die Erfindung wurde oben an Hand der bevorzugten Ausführung in einem Turbolader beschrieben, doch versteht es sich für den Fachmann, daß die Erfindung mit im wesentlichen denselben Vorteilen auch an anderen Strömungsmaschinen, wie etwa Sekundärluftpumpen, angewendet werden kann. In jedem Falle sind Strömungsmaschinen mit einer Turbine wegen der hohen Drehzahlen hinsichtlich der Geräuschentwicklung besonders kritisch.

Ferner braucht die Lagerbuchse nicht, wie dargestellt, einteilig ausgeführt zu sein. Auch versteht es sich, daß zwar nur die Schmiermittelbohrungen 39 gezeigt wurden, dieselbe (oder eine ähnliche) Anordnung auch an den Schmiermittelbohrungen 38 (Fig. 1) vorgesehen sein können und im allgemeinen auch werden.

## Patentansprüche

1. Strömungsmaschine (1), die folgendes aufweist:
eine Welle (18),
ein Lagergehäuse (4) zum Lagern der Welle (18), welche über mindestens zwei zu mindestens einem Wellenlager (34) führenden Schmierbohrungen (39) geschmiert ist, welche eine vorbestimmte Geometrie hinsichtlich Durchmesser, Länge und Winkelanordnung aufweisen; und
ein Turbinengehäuse (2) zur Unterbringung eines an der Welle (18) befestigten Turbinenrades (T) in einem Turbinenraum (42) des Turbinengehäuses (2), das am Lagergehäuse (4) angeschlossen ist,
**dadurch gekennzeichnet, daß**
innerhalb des Lagergehäuses (4) am Wellenlager (34) eine Schallunterdrückungsanordnung (39-41) vorgesehen ist.

2. Strömungsmaschine (1) nach Anspruch 1, **dadurch gekennzeichnet, daß** an der Welle (18) - dem Turbinenrad (T) gegenüberliegend - ein Kompressorrotor (K) eines Turboladers befestigt ist.

3. Strömungsmaschine (1) nach Anspruch 1 oder 2, **dadurch gekennzeichnet, daß** die Schallunterdrückungsanordnung für wenigstens zwei der Schmierbohrungen (39) eine unterschiedliche Geometrie bezüglich der Lagerbuchse (34) aufweist.

4. Strömungsmaschine (1) nach Anspruch 3, **dadurch gekennzeichnet, daß** mindestens eine der Schmiermittelbohrungen (39a-c) einen gegenüber der mindestens zweiten Schmierbohrung (39a-c) einen unterschiedlichen Durchmesser besitzt (Fig. 2).

5. Strömungsmaschine (1) nach Anspruch 3 oder 4, **dadurch gekennzeichnet, daß** mindestens eine der Schmierbohrungen (39g, 39h) einen gegenüber der mindestens zweiten Schmierbohrung (39g, 39h) einen unterschiedlichen Einmündungswinkel in das Innere der Lagerbuchse (34) und/oder eine unterschiedliche Länge besitzt (Fig. 4).

6. Strömungsmaschine (1) nach Anspruch 3, 4 oder 5, **dadurch gekennzeichnet, daß** die Schmierbohrungen (39d-39f) mit unterschiedlichen Umfangswinkeln (c, d) über den Umfang der Lagerbuchse (34) verteilt sind (Fig. 3).

## Claims

1. A fluid flow engine (1) comprising the following :
a shaft (18),
a bearing housing (4) to support the shaft (18), which is lubricated by means of at least two lubricating borings (39), leading to at least one shaft bearing (34) and having a predetermined geometry regarding cross section, length and angular disposition; and
a turbine housing (2) for housing a turbine wheel (T) which is fastened on the shaft (18) in a turbine chamber (42) of the turbine housing (2) which is connected to the bearing housing (4),
**characterized in that**
inside of the bearing housing (4) and on the shaft bearing (34) is provided sound suppressing means (39-41).

2. Fluid flow engine (1) as claimed in claim 1, **characterized in that** a compressor rotor (K) of a turbocharger is fastened on the shaft (18) opposite of the turbine wheel (T).

3. Fluid flow engine (1) as claimed in claim 1 or 2, **characterized in that** the sound suppressing means comprise a different geometry of at least two lubricating bores with respect to the bearing means (34).

4. Fluid flow engine (1) as claimed in claim 3, **characterized in that** at least one of said lubricating bores (39a-c) has a different diameter as compared with the diameter of another one of said at least two lubricating bores (39a-c), (Fig.2).

5. Fluid flow engine (1) as claimed in claim 3 or 4, wherein at least one of said lubricating bores (39g, 39h) has a different junction angle under which it orifices lead into said bearing means (34) and/or a different length, as compared with another one of said at least two lubricating bores (39g, 39h), (Fig.4).

6. Fluid flow engine (1) as claimed in claim 3, 4 or 5, wherein said lubricating bores (39g, 39h) are arranged with different peripheral angles (c,d) along the periphery of said bearing means (34), (Fig.3).

## Revendications

1. Turbomachine (1), présentant les caractéristiques suivantes :
un arbre (18),
un boîtier de palier (4) pour le montage en palier de l'arbre (18), lubrifié par l'intermédiaire de deux perçages de lubrification (39) menant à au moins un palier d'arbre (34) et présentant une géométrie prédéterminée du point de vue du diamètre, de la longueur et de l'agencement angulaire ; et
un carter de turbine (2), pour loger une roue de turbine (T) fixée à l'arbre (18) dans un espace de turbine (42) du carter de turbine (3), raccordé au carter de palier (4),
**caractérisée en ce qu'**
à l'intérieur du carter de palier (4) est prévu, sur le palier d'arbre (34), un dispositif d'annulation de bruit (39 à 41).

2. Turbomachine (1) selon la revendication 1, **caractérisée en ce que** sur l'arbre (18) - à l'opposé de la roue de turbine T - est fixé un rotor de compresseur K d'un turbocompresseur de suralimentation.

3. Turbomachine (1) selon la revendication 1 ou 2, **caractérisée en ce que** le dispositif d'annulation de bruit présente, pour au moins deux des perçages de lubrification (39), une géométrie différente par rapport au coussinet de palier (34).

4. Turbomachine (1) selon la revendication 3, **caractérisée en ce qu'**au moins l'un des perçages de fluide de lubrification (39a-c) présente un diamètre différent par rapport au au moins le deuxième perçage de lubrification (39a-c) (Fig. 2).

5. Turbomachine (1) selon la revendication 3 ou 4, **caractérisée en ce qu'**au moins l'un des perçages de lubrification (39g, 39h) présente un angle d'embouchure différent par rapport au au moins le deuxième perçage de lubrification (39g, 39h), dans l'intérieur du coussinet de palier (34) et/ou présente une longueur différente (Fig. 4).

6. Turbomachine (1) selon la revendication 3, 4 ou 5, **caractérisée en ce que** les perçages de lubrification (39d-39f) sont répartis avec des angles périphériques (c,d) différents sur la circonférence du coussinet de palier
